(19) Europäisches Patentamt

European Patent Office

Office européen des brevets

(11) EP 3 013 068 A1

(12) EUROPEAN PATENT APPLICATION

(43) Date of publication:
27.04.2016 Bulletin 2016/17

(51) Int Cl.:
*H04Q 11/00* (2006.01)

(21) Application number: 14189944.3

(22) Date of filing: 22.10.2014

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicant: Alcatel Lucent
75007 Paris (FR)

(72) Inventors:
• Rahn, Jürgen
90411 Nürnberg (DE)

• Fekl, Thomas
90411 Nürnberg (DE)
• Thomas, Wolfgang
90411 Nürnberg (DE)

(74) Representative: MERH-IP Matias Erny Reichl
Hoffmann
Patentanwälte PartG mbB
Paul-Heyse-Strasse 29
80336 München (DE)

Remarks:
Amended claims in accordance with Rule 137(2)
EPC.

(54) **Method for generating protection switching information**

(57) The present document relates to a method for generating protection switching information in an optical data transmission system (10) comprising redundant transmission capacity for switching from a working data path (L1) to a redundant data path (L2), the method comprising the steps of :
- gathering statistical characteristics (S200), said statistical characteristics being derived at least partially from an optical receiver (110), wherein said statistical characteristics comprise information regarding the quality of the received optical signal;
- comparing the gathered statistical characteristics with a threshold value (S220);
- generating protection switching information (S230) if the gathered statistical characteristics exceed said threshold value.

Fig. 2

EP 3 013 068 A1

**Description**

The present document relates to optical data transmission systems. In particular, the present document relates to a method for generating protection switching information in an optical data transmission system.

As the transmission bandwidth of optical data transmission systems and optical telecommunication equipment increases, the impact caused by network interruption becomes more and more significant. Naturally, this implies to users and network providers an increase in loss of revenue. For instance, a 10ms outage on a 40Gbit/s optical data transmission system will cause 50MByte of transmission data to be lost. Thus, the ability of telecommunication equipment to provide very fast mechanisms for traffic restoration in the event of traffic impairments is an essential characteristic and becomes more important with increasing data rates.

Linear and shared protection as standardized by the ITU-T committee in recommendation G.873.1 for optical transport networks (OTN) are based on providing some redundant capacity within the network. In order to maintain the transmission service, the protected traffic is switched over to an alternative route in the event of a failure, e.g. fiber cut or degradation of the service. Protection switching mechanism is based on the continuous supervision of defects on the transport entities as defined in ITU-T G.806 and ITU-T G.798 recommendations. Detection of these defects is done on the basis of checking signal integrity and for the signal performance degradation criteria on the basis of Bit Interleaved Parity (BIP) violation supervision. For all of these criteria, which are related to transmission performance, defect detection is on the basis of supervising the presence of bit errors of the optical transmission unit (OTU) / optical data unit (ODU) layer after passing the optical channel (OCH)/ OTU adaptation function which is processing the forward error correction. The defect detection and criteria are defined in clause 6 of ITU-T recommendation G.798. The detection of the individual defects which are related to transmission performance of the optical physical layer can take up significant time until a defect triggering a Signal Fail (SF) or Signal Degrade (SD) indication and consequent action is detected. ITU-T recommendation G.798 defines no detection time for loss of continuity defects, while the detection of the loss of frame (dLOF) defect requires a persistent out-of-frame (OOF) situation of at least 3ms. So, also for this basic defect, detection time may take 10ms or more in case of a toggling OOF situation due to degraded transmission. Defect detection of the degraded defect for OTN is based on the bursty algorithm as defined in G.806 that evaluates the excess of a threshold of number of errored blocks in a one second interval. As a consequence, the detection of the degraded (dDEG) defect will take significantly more than one second (see ITU-T G.806). In addition, this slow criterion is also based on the post forward error correction (FEC) BIP count, i.e. is not related to the direct physical transmission performance causing further delay.

Hence, there is a need to provide for a quick-reacting method for generating protection switching information in order to minimize the outage of data transmission. Similarly, an improved control unit for generating protection switching information is desired.

According to a first aspect, a method for generating protection switching information in an optical data transmission system is provided. The optical data transmission system comprises redundant transmission capacity for switching from a working data path to a redundant data path, in the following also referred to as protection data path. The terms "path" and "link" are synonymously used in the following.

According to a first step, statistical characteristics are gathered. Said statistical characteristics are derived at least partially from an optical receiver. More in detail, the statistical characteristics may be derived at least partially from the analog receiver portion, i.e. a receiver portion in which the received signal is an analog signal. Said statistical characteristics comprise information regarding the quality of the transmitted optical signal, i.e. loss of signal situations or signal degradations might be detected based on said statistical characteristics. Preferably, the statistical characteristics are gathered continuously or quasi-continuously in order to constantly be aware of the transmission quality. Statistical characteristics according to the present document may be any time-varying information or values which can be derived from the optical receiver or components associated with the optical receiver of the optical data transmission system.

In a subsequent step, the gathered statistical characteristics are compared with one or more threshold values. Preferably, different statistical characteristics from different stages of the optical receiver are gathered wherein each statistical characteristic is correlated with a corresponding threshold value or range in which the statistical characteristic should be included.

If the gathered statistical characteristics exceed said threshold value, protection switching information is generated which may cause switching of optical data transmission from the current working optical link to the redundant optical link. By using statistical characteristics directly derived at the optical receiver, the response time between signal loss or signal degradation and provision of protection switching information is significantly decreased.

According to embodiments, the statistical characteristics are at least partially gathered in the optical channel layer (OCH-layer) according to the OTN-hierarchy. The OCH-layer is the lowest layer being close (referring to the OTN-hierarchy) to the optical fiber transmitting the optical signal. The delay caused by data processing in higher layers is thus minimized, thereby further decreasing the response time.

According to embodiments, statistical characteristics are gathered at least partially before clock and/or data recovery. By said clock and/or data recovery processing, the original digital data, respectively the clock signal is recovered from the received analog signal. In other words, the statistical characteristics are gathered at least partially in the analog portion of the optical receiver. Said analog portion of the optical receiver shows quick changes of the received signal properties and statistical characteristics derived from said analog portion may be advantageously used for enhancing the response time of protection switching.

According to embodiments, said statistical characteristics include the received signal power of a respective optical channel transmitted via the optical data transmission system. Based on the received signal power, loss of signal situations and also signal degradation situations can be detected immediately. Preferably, the signal power may be derived from a signal level detection unit included in the analog portion of the optical receiver. Said signal level detection unit may be also used for controlling the gain of an optical amplifier included in the analog portion of the optical receiver.

According to embodiments, said statistical characteristics include automatic gain control information or information derived from said automatic gain control information. Said automatic gain control information may be used for controlling the optical gain of a signal amplifier comprised within the optical receiver, specifically comprised within the analog portion of the optical receiver. Said automatic gain control information is indicative for the amplification factor of the signal amplifier in the receiver, i.e. indicates the degree of amplification effected by the signal amplifier. Preferably, the automatic gain control information and the received signal power is evaluated simultaneously because the automatic gain control information has strong effect on the signal power information derived at the signal level detection unit. Alternatively, the signal power information may be derived before signal amplification.

According to embodiments, said statistical characteristics include information derived from a forward error correction (FEC) unit, said FEC unit being arranged downstream the optical receiver for providing error correction. Preferably, the FEC unit provides forward error correction based on a set of additional bits being included in the transmitted information in order to correct bit defects. For example, the FEC algorithm uses a Reed-Solomon code for correcting said bit defects. Based on the information derived from a FEC unit, a gradual degradation process of the optical transmission system might be detected.

According to embodiments, said information derived from said forward error correction (FEC) unit include information regarding a number of falsely detected ones and/or falsely detected zeros. From said numbers of wrongly detected bits, information regarding degradation related to the amplified spontaneous emission (ASE) of optical amplifiers, polarization mode dispersion and chromatic dispersion of the fiber can be derived because the statistical distribution of number of wrongly detected digital ones and zeros is related to these impairments. So the likelihood of wrongly detected digital ones which are equally distributed in the pattern could likely be affected by ASE, while a high number of wrongly detected digital ones after correctly detected ones or wrongly detected digital zeros after leading correctly detected zeros could likely be caused by chromatic or polarization mode dispersion of the optical fiber. So by using said information, additional information regarding system degradation / system failure reasons may be derived.

According to embodiments, said information derived from said forward error correction (FEC) unit include information regarding the data entity error rate. A data entity may be for example a single bit or a set of bits, for example, a packet including a plurality of bits. The FEC algorithm may provide the number of corrected bits or, in general, number of corrected data entities. Said information may be used for generally assessing transmission quality.

According to embodiments, said statistical characteristics include information regarding decision threshold value provided by a decision threshold control logic, said decision threshold value controlling the decision threshold of a data recovery unit within the optical receiver. The data recovery unit may provide analog-to-digital conversion of the received signal. In order to be able to make high/low (logical 1/0) decisions, a decision threshold value is required. The decision threshold control logic provides said threshold value to the recovery unit. The decision threshold value may change when asymmetric signal impairments occur (e.g. because of a asymmetric noise distribution). So, also untypical changes of the decision threshold value may provide a hint towards degradation or failure of the optical transmission system.

According to embodiments, the threshold value is adapted based on at least one of the following information: optical receiver type, received bit rate, the forward error correction type. These characteristics of the optical transmission system have a great influence on the characteristics of the received signal. Therefore, the threshold values used for initiating protection switching should be adapted according to said optical transmission system information in order to make correct switching decisions.

According to embodiments, a failure signal is generated if the received signal power of an optical channel is below a power threshold value and the data entity error rate is above an error rate threshold value.

According to embodiments, a degradation signal is generated if the ratio between the sum of falsely detected ones and falsely detected zeros and the received bit rate is above a certain threshold value.

According to embodiments, a degradation signal is provided by the protection switching logic if at least one of the following conditions are fulfilled: the decision threshold value is out of a given decision threshold value range, automatic gain control information indicates that automatic gain control value is at maximum or minimum value, the received optical power is below a minimum power value or above a maximum power value.

According to embodiments, said protection switching information is transmitted to a protection control unit also referred to as protection trigger entity in order to cause the provision of a switching trigger by said protection trigger entity. Said protection trigger entity may be, for example, a protection state machine. The switching trigger may be provided to one or more protection switches being arranged within the optical data transmission system for switching from the working data path to the protection data path.

According to a further aspect, a control unit comprising a first interface for receiving information regarding the quality of a transmitted optical signal of an optical transmission system and a second interface for providing protection switching information to a protection trigger entity is provided. The control unit further comprises a protection switching logic adapted to gather statistical characteristics, said protection switching logic being coupled via the first interface with an optical receiver for receiving statistical characteristics being derived at least partially from said optical receiver. Said statistical characteristics comprise information regarding the quality of a transmitted optical signal of an optical transmission system. The protection switching logic is further adapted to compare the gathered statistical characteristics with a threshold value and to provide protection switching information at the second interface, if the gathered statistical characteristics exceed said threshold value.

It should be noted that the methods and systems including its preferred embodiments as outlined in the present patent application may be used stand-alone or in combination with the other methods and systems disclosed in this document. Furthermore, all aspects of the methods and systems outlined in the present patent application may be arbitrarily combined. In particular, the features of the claims may be combined with one another in an arbitrary manner. Further, if not explicitly indicated otherwise, embodiments of the invention can be freely combined with each other.

The invention is explained below in an exemplary manner with reference to the accompanying drawings, wherein

Fig. 1    illustrates an example schematic representation of an optical data transmission system comprising redundant transmission capacity;

Fig. 2    illustrates an example block diagram of a system providing a protection switch trigger; and

Fig. 3    illustrates an example schematic flowchart for generating a protection switch trigger.

Linear and shared protection as standardized by ITU-T in Recommendations G.873.1 and G.873.2 for OTN networks are based on providing redundant capacity within the network. In order to maintain transmission service, protected traffic is switched over to an alternative route in the event of a failure. Protection switching is typically based on the continuous supervision of defects on the transport entities as defined in G.806 and G.798. Detection of these defects is typically based on checking signal integrity, and for signal performance degradation criteria, on the basis of BIP violation supervision. Detection is performed on the basis of supervising the presence of bit errors of the OTU / ODU layer after passing the OCH/ OTU adaptation function. Defect detection and criteria are defined in clause 6 of ITU-T Rec G.798.

According to Fig. 14-4 of ITU G.798, TSF and TSD information is input to a protection switch function to control a protection switch. TSF and TSD are defined in ITU T G.806 as follows:

• Trail Signal Degrade (TSD): A signal degrade indication output at the access point of a termination function.
• Trail Signal Fail (TSF): A signal fail indication output at the access point of a termination function.

In the OTN context (G.798), this information is generated at the OTUk termination (of the OTN line signal). In general, any transmission layer provides two signals: SF (Signal Fail) indicating that the signal has completely failed; and SD (Signal Degraded) indicating that there are bit errors in the signal. Protection functions use SF and SD as input signals and can operate on any layer, which provides SF and SD.

In the present document, a new layer providing new SD and new SF is suggested. Protection can be applied at this layer using a standards defined protection state machine such as a 1+1 SNC (subnetwork connection protection). The suggested solution is suitable e.g. for linear 1+1 and also shared 1:n and SRP (Shared Ring Protection) as well as SMP (Shared Mesh Protection) architectures. Additional contributing information to the protection switching process is used to ensure the available service. This additional contributing information is used to detect service affecting transmission degradation in a shorter time frame compared to ones currently defined in the ITU-T defined standards.

The proposed concept is to compose a model based on statistical characteristics of the optical receiver, available physical measures and/or settings of the control loops which set the amplitude threshold used for data quantization in the optical modules receive path. This model can be used as an additional input to the protection switching process. If the model indicates a critical signal quality, it can be used to trigger the respective protection switch. The model may be based on one or more of the following contributors:

Decision threshold setting $V_{TH}$ as set by optics control loop

This allows detecting a severe analog distortion of the signal if the threshold in a NRZ coded line signal is out of the $V_{TH}$ range:

$$V_{TH\_out\ of\ range} = \text{True if } (0.9\ V_{sinalmax} < VTH < 0.1\ V_{sinalmax}) = \text{true}$$

This indicates anomalies in the analog optical transmission path such as excessive PMD (polarization mode dispersion), excessive ASE generated by amplifier degradation, degradation of an APD receiver diode, etc. The proposed values are mere examples and may be adapted according to the respective transmission system environment (type of optical transmitter, type of optical receiver, optical detection means etc.)

Number of corrected errors by the Forward Error Correction

This includes the number of falsely detected ones which are actually zeros (CBIT1) and the number of incorrectly detected zeros which are actually ones (CBIT0)).

Received signal power of the optical channel

A low power will raise the loss of payload defect in line to ITU-T G.798. In WDM systems using optical amplifiers, the range of the optical receive power is controlled by the operation settings of the amplifier systems and can have a more narrow range than in simple attenuation limited transmission systems. A parameter $OPTPOWER_{OUT-OF-RANGE}$ can be generated and used that indicates degradation by amplifier operation (the below proposed possible values are non-limiting examples)

$$OPTPOWER_{OUT-OF-RANGE} = \text{true if } OPTPOWER_{nominal} * 4 <$$
$$OPTPOWER_{received} < OPTPOWER_{nominal} / 2$$

Bit rate of the monitored transmission link

This is a parameter that is related to the range of all analog parameters in the design, as parameters used in design, and may include calculating TSDdigital as indicated below.

Characteristics of the optical receiver

This parameter may include asymmetric noise distribution of high signal levels (logical 1) and low signal levels (logical 0) due to use of APD diode in contrast to PIN diode as a design parameter influencing the VTH range. This will be reflected in unequal distribution of corrected 0 or 1 in NRZ signal or a strong asymmetric error vector in coherent phase and amplitude modulation systems. For NRZ modulation this will be reflected after passing the threshold control loop.

A further parameter may be based on limitations of the automatic gain control loop (AGC) within the optics (gain limited or noise limited). This is an analog parameter generated by the amplifier control loop. For NRZ systems, $AGC_{at\_limit}$

$$AGC_{at\_limit} = \text{true if } ((AGC_{gain} = MAX)\ OR\ (AGC_{gain} = 0)$$

This will be reflected in the TSDdigital as generated by the FEC processing algorithm.

The details of the parameters related to different thresholds and detection limits are implementation dependent related to used FEC types and receiver technology. An example of a generic model is described below.

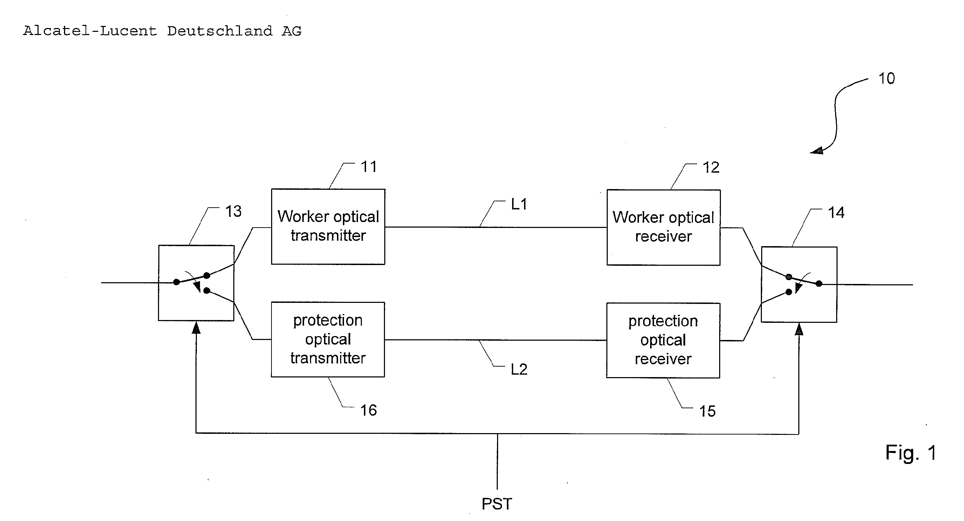

Fig. 1 schematically illustrates an optical transmission system 10 with redundant transmission capacities implementing a 1:1 protection switching architecture. The system comprises two optical transmitters 11, 16 for the worker transmission link and for the protection transmission link and two optical receivers 12, 15 for the working link and for the protection link. In the following, the term "path" may be used synonymously for the term "link". The digital transmission trail (digital data link providing digital information in the electrical domain) is coupled with the worker optical transmitter 11 or the protection optical transmitter 16 via a first protection switch 13, in standards terms called a selective bridge. In other words, by means of said protection switch 13, the transmission link is split in two parallel transmission links L1, L2. In addition, the optical transmission system 10 comprises a further protection switch 14, the so called selector at the receiving side, in order to couple one of said transmission links L1, L2 with the digital transmission trail. So, by means of said protection switches 13, 14, the traffic can be transmitted over at least two transmission links L1, L2 and the corresponding transmitter and receiver. When transmitting optical data between the optical worker transmitter 11 and the optical worker receiver over link L1, only one transmission link L1, L2 is active and the further transmission link L1, L2 is in standby. In other words, traffic is routed to only one transmission link. According to the embodiment of Fig. 1, transmission link L1 is the working link and transmission link L1 is the protection link (standby). The protection switches 13, 14 comprise an interface for receiving a protection switch trigger (PST), said protection switch trigger (PST) initiating a switching of both protection switches 13, 14 thereby causing a routing of data flow via the further transmission link L2, i.e. the previous protection link is activated and the previous working link is deactivated. Preferably, the protection switches 13, 14 are switched simultaneously or essentially simultaneously. Thereby, the downtime of the optical transmission system in case of defects at the working link is significantly reduced. The same principle can be applied to systems implementing a 1+1 protection switching architecture where traffic is routed to both transmission paths via a so called broadcast bridge instead for the shown selective bridge 13 depicted in Fig. 1 and only the receiver makes a selection.

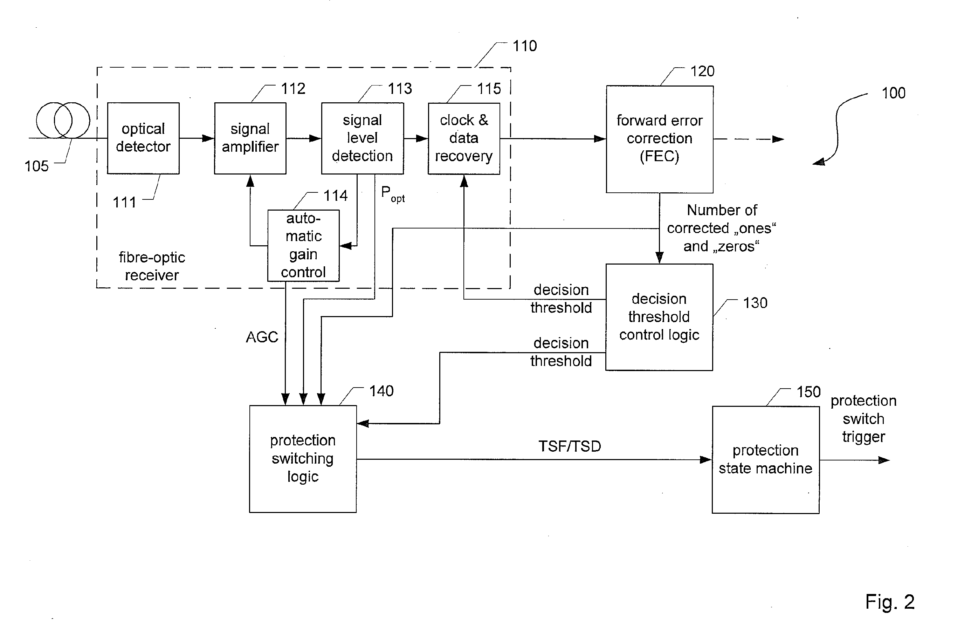

Fig. 2 shows a block diagram of a system 100 for generating said protection switch trigger. The system 100 includes an optical receiver 110, specifically a fiber-optic receiver being coupled with an optical transmission path 105, specifically an optical fiber for receiving optical information transmitted via said optical transmission path 105. Via said optical transmission path 105, a wavelength division multiplexed (WDM) signal or dense wavelength division multiplexed (DWDM) signal may be transmitted.

The optical receiver 110 comprises an optical detector 111. Said optical detector 111 may include detection means for detecting an optical data signal and providing an analog electrical data signal based on the detected optical data signal. Said detection means may be a PIN-diode or an avalanche photodiode (APD). In other words, the information received at the optical detector 111 in the optical domain is converted into information in the analog electrical domain. Said electrical data signal may be provided to a signal amplifier 112 in order to amplify the electrical data signal. Said signal amplifier 112 may comprise a gain control mechanism in order to choose the gain provided by the signal amplifier 112 according to a control signal provided at a gain control input of the signal amplifier 112.

The amplified analog electrical data signal may be forwarded to a signal level detection unit 113. Said signal level detection unit 113 may be adapted to determine power information of the amplified electrical data signal. For example, the signal level detection unit 113 may gather information regarding the electrical power of the amplified electrical data signal and provide said information to a gain control unit 114. The signal level detection unit 113 may be coupled with the signal amplifier 112 via said gain control unit 114 in order to control the gain of the signal amplifier 112. In other words, the signal amplifier 112, the signal level detection unit 113 and the gain control unit 114 form a control loop for amplifying the analog electrical data signal such that a certain signal level is achieved at the output of the signal amplifier 112. Preferably, the gain of the signal amplifier 112 may be chosen such that the signal level of the electrical data signal is suitable for the following electrical data processing.

After signal level detection, the electrical data signal is provided to a recovery unit 115 performing clock and data recovery. Thereby, the optical receiver may synchronize itself to the clock of the optical transmitter providing said signal thereby providing digital information at the output of the recovery unit 115. The optical clock and data recovery may be performed based on a decision threshold value. The recovery unit 115 may decide based on the decision threshold value if digital one or digital zero has been received at sampling time.

The digital information provided at the output of the recovery unit 115 may be provided to a forward error correction (FEC) entity 120. Said forward error correction (FEC) entity 120 may be directly coupled with the output of the recovery unit 115 or may be coupled with said output of the recovery unit 115 via additional processing entities (not shown in Fig. 2). Said FEC entity 120 may exploit overhead information included in the transmitted data signal in order to perform bit error correction. For example, a Reed-Solomon code may be used for forward error correction.

The forward error correction entity 120 may comprise a data interface providing information regarding the number of bits being corrected by the FEC. More in detail, information regarding the number of corrected "ones" (received as "ones" but sent as "zeros") and number of corrected "zeros" (received as "zeros" but sent as "ones") may be provided at the data interface of the FEC entity 120. The data interface of the FEC entity 120 may be coupled with a decision threshold control logic 130 for receiving said information regarding the number of corrected bits. Based on said information, the decision threshold control logic 130 may provide a decision threshold information based on which the recovery unit 115 may make the analog to digital conversion. Thus, the decision threshold control logic 130 may be coupled with the recovery unit 115 for providing said decision threshold information to the recovery unit 115.

In order to achieve protection switching in a short period of time, preferably in a period of time less than 10ms, values provided by units of the upper-mentioned system 100 may be monitored and evaluated regarding the necessity of protection switching. Said monitoring may be performed continuously or quasi-continuously. More in detail, the information may be provided to an input interface of a protection switching logic 140. Said protection switching logic 140 may evaluate the information provided by said optical receiver units or units coupled with the optical receiver and decide based on said information whether a switching from working path to protection path may be necessary. As described later on in closer detail, the protection switching logic 140 may perform arithmetic and/or logical operations in order to make said decision. For example, the protection switching logic 140 may compare the received information or secondary information derived from said received information with one ore more threshold values for making the decision. If one or more thresholds are exceeded, the protection switching logic 140 may provide information indicating a signal degradation or signal fail to a protection trigger entity, in the following also referred to as protection state machine 150. Said information may be a trail signal degrade (TSD), i.e. a signal degrade indication or a trail signal fail (TSF), i.e. a signal fail indication. Based on said information, the protection state machine 150 may launch a protection switch trigger which causes a switching of the protection switches 13, 14 (Fig. 1).

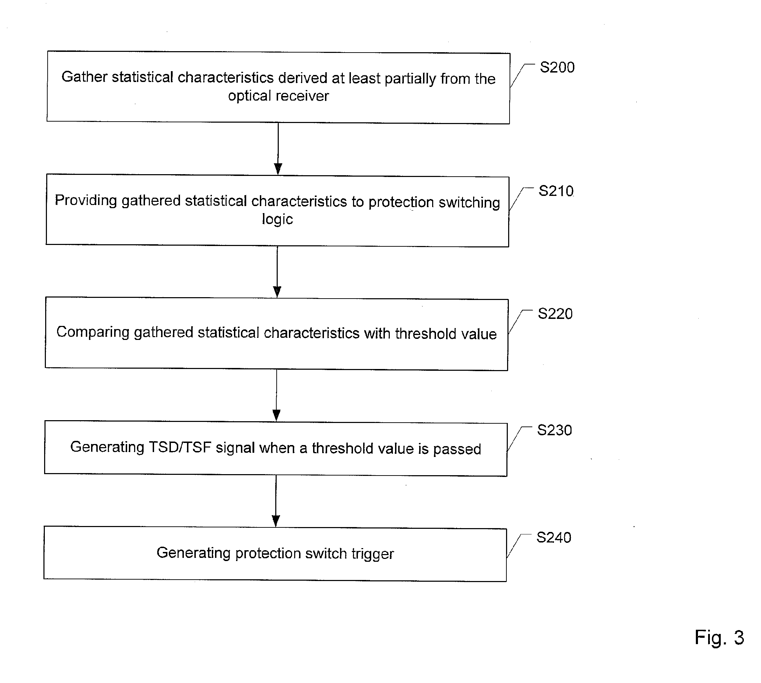

The procedure for generating a protection switch trigger is explained in closer detail based on Fig. 3. In a first step, statistical information, in the following also referred to as statistical characteristics, is gathered (S200). Said statistical characteristics may be at least partially derived from the optical receiver 110. In other words, information which may be internally used within the optical receiver 110 for dynamically adapting the optical receiver to the properties of the actual received signal (e.g. signal power, noise etc.) may be used to derive information regarding the need of switching the data flow from the working path to the protection path. Said statistical characteristics may show variations caused by transmission system defects in an early stage thereby enabling an immediate switching from the working path to the protection path well before the transmission of the signal failed. Thus, the response time for initiating said switching is significantly reduced.

Preferably, the statistical characteristics are at least partially gathered from a unit in the receiving part of the optical transmission system, said unit being assigned to the optical channel layer (OCH-layer) according to the OTN-hierarchy (ITU-T G.872). Said statistical characteristics may be derived out of the signal level detection unit 113 or the gain control unit 114. At the gain control unit 114, an automatic gain control (AGC) signal may be derived, the AGC signal being correlated with the amplification factor of the signal amplifier 112. Specifically, the AGC signal may be in a range between a minimum AGC value and a maximum AGC value wherein AGC = min indicates that the signal amplifier 112 works with the lowest gain value and AGC = max indicates that the signal amplifier 112 provides maximum amplification.

In addition or alternatively to the AGC signal, information regarding the optical power of the received optical signal may be provided to the protection switching logic 140. In WDM systems using optical amplifiers, the range of the optical receive power is controlled by operation settings of the amplifier systems. The received optical power is a design parameter having a more narrow range than simple attenuation-limited transmission systems. When the received power is too low, a loss-of-payload (LOP) defect may raise as indicated in ITU-T G.798. Therefore, the protection switching logic 140 may monitor the optical power of the received optical signal in order to determine if said optical power is within a certain power range.

Preferably, at least one of said statistical characteristics may be gathered upstream the recovery unit 115. The signal level detection unit 113 and the gain control unit 114 are very close to the optical input of the optical receiver. Thus, the statistical characteristics derived from said units may immediately change in case of a degradation of the received optical signal and therefore provides a quick response time for initiating a switching of the data transmission to the protection path.

In addition, said statistical characteristics may be gathered from said FEC entity 120. The FEC entity may be adapted to correct occurred bit errors by using optical channel overhead (OCH-OH) as defined in ITU-T G.709 recommendations. The FEC entity 120 may thereby use, for example, a Reed-Solomon code for correcting the occurred bit errors. Preferably, the FEC entity 120 may provide information regarding the number of wrongly detected digital "ones" (detected "ones" which were originally transmitted as "zeros") and the number of wrongly detected digital "zeros" (detected "zeros" which were originally transmitted as "ones"). From said numbers of wrongly detected bits, information regarding the amplified spontaneous emission (ASE) and mode dispersion of the fiber can be derived. On the one hand, the number of wrongly detected digital "ones" is mainly affected by ASE, i.e. a great number of wrongly detected digital "ones" indicates a high level of ASE. On the other hand, the number of wrongly detected digital "zeros" is mainly caused by mode dispersion of the optical fiber. So, based on the statistical characteristics derived from the FEC entity 120, also information regarding the cause of a failure may be derived.

Finally, the gathered statistical characteristics may also include the decision threshold value $V_{th}$ provided by the decision threshold control logic 130. By means of the decision threshold value $V_{th}$, a severe analog distortion of the signal can be detected if the threshold in a NRZ coded line signal is out a certain range. Also anomalies in the analog optical transmission path, for example excessive PMD (polarization mode dispersion), excessive ASE generated by optical amplifier degradation or degradation of an avalanche photodiode (APD) within the optical detector 111 can be identified.

The upper-mentioned gathered statistical characteristics are provided to the protection switching logic 140 (S210). Said protection switching logic 140 is adapted to compare the gathered statistical characteristics with a correlated threshold value in order to determine whether one of said characteristics exceed said threshold value (S220). Specifically, the protection switching logic 140 may be adapted to process statistical characteristics as follows:

The protection switching logic 140 may receive information regarding the AGC signal from the gain control unit 114 of the optical receiver 110. The protection switching logic 140 may compare the AGC signal with an upper AGC threshold value $AGC_{up}$ and a lower AGC value $AGC_{low}$. The upper AGC threshold value $AGC_{up}$ may be the maximum AGC value ($AGC_{up} = AGC_{max}$), i.e. the AGC value at which the signal amplifier provides the maximum amplification value.

Similarly, the lower AGC value $AGC_{low}$ may be the minimum AGC value ($AGC_{low} = AGC_{min}$), i.e. the AGC value at which the signal amplifier provides the minimum amplification value. Based on said upper AGC threshold value $AGC_{up}$ and lower AGC value $AGC_{low}$ the protection switching logic 140 may derive a digital information based on the following formula:

$$AGC_{limit} = true \; if \; ((ACG \geq ACG_{up}) \; or \; (ACG \leq ACG_{low}));$$

In case that $AGC_{up} = AGC_{max}$ and $AGQ_{low} = AGC_{min}$ the formula can be rewritten as follows:

$$AGC_{limit} = true \; if \; ((ACG = ACG_{max}) \; or \; (ACG = ACG_{min})).$$

Furthermore, the protection switching logic 140 may receive information regarding the optical power $P_{opt}$ from the signal level detection unit 113 of the optical receiver 110. The protection switching logic 140 may compare the $P_{opt}$ signal with a power range defined on the basis of a nominal optical power $P_{nom}$, thereby deriving a digital information if the optical power $P_{opt}$ is within a power range defined based on the following formula:

$$P_{opt,out \; of \; range} = true \; if \; (P_{opt} < a \cdot P_{nom}) \; or \; (P_{opt} > b \cdot P_{nom})$$

wherein a and b are floats. Preferably a is in the range of $a \leq 0.9$ and is in the range of $b \geq 2$. According to a specific embodiment as example of a possible implementation, a = 0.5 and b = 4.

In addition, the protection switching logic 140 may receive information from the Forward Error Correction (FEC) entity 120. The FEC entity may provide the number of corrected errors, specifically, the number of wrongly detected digital "ones" (detected "ones" which were originally transmitted as "zeros", in the following also referred to as CBIT1) and the number of wrongly detected digital "zeros" (detected "zeros" which were originally transmitted as "ones", in the following also referred to as CBIT0). Asymmetric noise distribution of high signal levels (logical 1) and low signal levels (logical 0) may arise due to use of an APD diode in contrast to a PIN diode as design parameter. Said asymmetric noise distribution will on the one hand be reflected in unequal distribution of corrected 0 or 1 in NRZ signal or a strong asymmetric error vector in coherent phase and amplitude modulation systems and on the other hand influence the $V_{th}$ (decision threshold value) range. In addition, also the total data entity error rate ER may be provided as an input to the protection switching logic 140, wherein a data entity may be a single bit or a couple of bits (e.g. a packet).

Finally, the protection switching logic 140 receives the decision threshold value $V_{th}$ provided by the decision threshold control logic 130 for determining whether said decision threshold value $V_{th}$ is in the desired range. Specifically, the protection switching logic 140 may check the decision threshold value $V_{th}$ based on the following formula:

$$V_{th,out \; of \; range} = true \; if \; (x \cdot V_{signal,max} > V_{th}) \; OR \; (V_{th} > y \cdot V_{signal,max}),$$

wherein $0 < x,y < 1$ and $V_{signal, max}$ is a maximum decision threshold value. According to a specific embodiment, $x = 0.1$ and $y = 0.9$.

The upper-mentioned parameters related to the different thresholds, ranges and detection limits are implementation-dependent and strongly related to use of FEC types and receiver technology and may therefore be adapted according to said transmission system properties.

Based on the aforementioned thresholds, respectively, ranges, the protection switching logic 140 may generate trail signal degradation (TSD) or trail signal fail (TSF) information (S230) based on the following criteria:

$$Dlosp = true\ if \left(P_{opt} < P_{dLOS,th}\right) AND\ ER > ER_{th};$$

wherein Dlosp is loss of payload signal, $P_{opt}$ is the received optical signal, $P_{dLOS,th}$ is a power threshold value for detecting loss of payload signal, ER is the data entity error rate and $ER_{th}$ is the data entity error rate threshold. The data entity error rate threshold $ER_{th}$ may be, for example in the range of $10^{-2}$ to $10^{-4}$, for example $10^{-3}$.

Based on the loss of payload signal Dlosp, the trail signal fail (TSF) information is derived based on the following formula:

$$TSF = true\ if\ ((Dlosp = true)\ or\ (dLOF = true));$$

wherein dLOF is loss of frame defect information that is to be detected as defined in clause 6.2.5.1 of ITU-T Rec G.798 on base of the frame alignment process defined in clause 8.2.1 of also ITU-T Rec G.798.

Said trail signal degradation (TSD) may be generated based on a combination of a trail signal degradation information ($TSD_{digital}$) derived from the digital receiving portion and an trail signal degradation ($TSD_{analog}$) information derived from the analog receiving portion, wherein both information $TSD_{digital}$ and $TSD_{analog}$ are digital information. The TSD information may be derived out of the $TSD_{analog}$ and $TSD_{digital}$ information based on the following formula:

$$TSD = true\ if \left(TSD_{digital} = true\right) OR \left(TSD_{analog} = true\right);$$

The $TSD_{digital}$ information may be derived on the basis of information provided by the FEC entity 120 using the following formula:

$$TSD_{analog} = true\ if \left(\left(\frac{CBIT1 + CBIT0}{Bitrate}\right) > C\right) AND\ NOT\ (TSF = true);$$

wherein CBIT1 is the number of wrongly detected digital "ones", CBIT0 is the number of wrongly detected digital "zeros" and C is a constant which depends on the received signal power, the receiver type, the FEC type and the particular error correction and error detection capability.

$TSD_{analog}$ information may be derived based on information provided by the analog processing part of the optical receiver using the following formula:

$$TSD_{analog} = true\ if\ ((V_{th,out\ of\ range} = true)\ OR\ (ACG_{limit} = true)\ OR$$
$$(P_{opt,out\ of\ range} = true))AND\ NOT\ (TSF = true);$$

Said $TSD_{analog}$ information further enhances the speed of degradation detection and thereby the response time of protection switching.

The upper-mentioned TSF and TSD information may be provided to a protection switching state machine in order to create a protection switch trigger. Said protection switch trigger initiates a switching of traffic from the working transmission path to the protection transmission path. Said TSF and TSD information may be used as fast trigger criterion (in addition to other trigger criterias) in accordance to the processing defined in ITU-T recommendations G.798, G.873.1 and G.873.2.

Summing up, a method and a control unit for providing fast switching to a redundant transmission path in case of loss of signal or signal degradation have been proposed. Proposed method is advantageous because it allows effective protection of reliable packet Data services over OTN networks with significantly reduced response time thereby reducing the loss of information caused by traffic impairments. Preferably, the response time of protection switching is lower than 10ms.

It should be noted that the description and drawings merely illustrate the principles of the proposed methods and systems. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the proposed methods and systems and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Finally, it should be noted that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, the explicit use of the term "processor" or "computer" should not be construed to refer exclusively to hardware capable of executing software, and may implicitly include, without limitation, digital signal processor (DSP) hardware, network processor, application specific integrated circuit (ASIC), field programmable gate array (FPGA), read-only memory (ROM) for storing software, random-access memory (RAM), and non-volatile storage. Other hardware, conventional and/or custom, may also be included.

**Claims**

1.  Method for generating protection switching information in an optical data transmission system (10) comprising redundant transmission capacity for switching from a working data path (L1) to a redundant data path (L2), the method comprising the steps of :

    - gathering statistical characteristics (S200), said statistical characteristics being derived at least partially from an optical receiver (110), wherein said statistical characteristics comprise information regarding the quality of the received optical signal;
    - comparing the gathered statistical characteristics with a threshold value (S220); and
    - generating protection switching information (S230) if the gathered statistical characteristics exceed said threshold value.

2.  Method according to claim 1, wherein the statistical characteristics are gathered in the optical channel layer (OCH- layer) according to the OTN-hierarchy.

3.  Method according to claim 1 or 2, wherein the statistical characteristics are gathered at least partially before clock and/or data recovery of the received signal.

4.  Method according to anyone of the preceding claims, wherein said statistical characteristics include the received signal power of a respective optical channel transmitted via the optical data transmission system (10).

5.  Method according to anyone of the preceding claims, wherein said statistical characteristics include automatic gain control information or information derived from said automatic gain control information, said automatic gain control information controlling the gain of an signal amplifier (112) in the optical receiver (110).

**6.** Method according to anyone of the preceding claims, wherein said statistical characteristics include information derived from a forward error correction (FEC) entity (120), said forward error correction (FEC) entity (120) being arranged downstream the optical receiver (10) for providing error correction.

**7.** Method according to claim 6, wherein said information derived from said forward error correction (FEC) entity (120) include information regarding a number of falsely detected ones and/or falsely detected zeros.

**8.** Method according to claim 6 or 7, wherein said information derived from said forward error correction (FEC) entity (120) include information regarding an error rate.

**9.** Method according to anyone of the preceding claims, wherein said statistical characteristics include information regarding a decision threshold value provided by a decision threshold control logic (130), said decision threshold value controlling the decision threshold of a data recovery unit (115) within the optical receiver (110).

**10.** Method according to anyone of the preceding claims, wherein the threshold value is adapted based on at least one of the following information: optical receiver type, received bit rate, forward error correction type.

**11.** Method according to anyone of the preceding claims, wherein a failure signal is generated if the received signal power of an optical channel is below a power threshold value and the data entity error rate is above an error rate threshold value.

**12.** Method according to anyone of the preceding claims, wherein a degradation signal is generated if the ratio between the sum of falsely detected ones and falsely detected zeros and the received bit rate is above a certain threshold value.

**13.** Method according to anyone of the preceding claims, wherein a degradation signal is provided by the protection switching logic (140) if at least one of the following conditions are fulfilled: the decision threshold value is out of a given decision threshold value range, automatic gain control information indicates that automatic gain control value is at maximum or minimum value, the received optical power is below a minimum power value or above a maximum power value.

**14.** Method according to anyone of the preceding claims, wherein said protection switching information is transmitted to a protection trigger entity (150) in order to cause the provision of a switching trigger by said protection trigger entity (150).

**15.** Control unit comprising a first interface for receiving information regarding the quality of a transmitted optical signal of an optical transmission system and a second interface for providing protection switching information to a protection trigger entity (150), the control unit further comprising:

a protection switching logic (140) adapted to gather statistical characteristics, said protection switching logic (140) being coupled via the first interface with an optical receiver (110) for receiving statistical characteristics being derived at least partially from said optical receiver (110), wherein said statistical characteristics comprise information regarding the quality of a received optical signal of an optical transmission system;
the protection switching logic (140) being adapted to compare the gathered statistical characteristics with a threshold value and being adapted to provide protection switching information at the second interface if the gathered statistical characteristics exceed said threshold value.


**Amended claims in accordance with Rule 137(2) EPC.**

**1.** Method for generating protection switching information in an optical data transmission system (10) comprising redundant transmission capacity for switching from a working data path (L1) to a redundant data path (L2), the method comprising the steps of :

- gathering statistical characteristics (S200), said statistical characteristics being derived at least partially from an analog receiving portion of an optical receiver (110), wherein said statistical characteristics comprise information regarding the quality of a received optical signal;
- comparing the gathered statistical characteristics with a threshold value (S220); and
- generating protection switching information (S230) if the gathered statistical characteristics exceed said threshold value.

2. Method according to claim 1, wherein the statistical characteristics are gathered in the optical channel layer (OCH-layer) according to the OTN-hierarchy.

3. Method according to claim 1 or 2, wherein the statistical characteristics are gathered at least partially before clock and/or data recovery (115) of the received signal.

4. Method according to anyone of the preceding claims, wherein said statistical characteristics include the received signal power of a respective optical channel transmitted via the optical data transmission system (10).

5. Method according to anyone of the preceding claims, wherein said statistical characteristics include automatic gain control information or information derived from said automatic gain control information, said automatic gain control information controlling the gain of an signal amplifier (112) in the optical receiver (110).

6. Method according to anyone of the preceding claims, wherein said statistical characteristics include information derived from a forward error correction (FEC) entity (120), said forward error correction (FEC) entity (120) being arranged downstream the optical receiver (10) for providing error correction.

7. Method according to claim 6, wherein said information derived from said forward error correction (FEC) entity (120) include information regarding a number of falsely detected ones and/or falsely detected zeros.

8. Method according to claim 6 or 7, wherein said information derived from said forward error correction (FEC) entity (120) include information regarding an error rate.

9. Method according to anyone of the preceding claims, wherein said statistical characteristics include information regarding a decision threshold value provided by a decision threshold control logic (130), said decision threshold value controlling the decision threshold of a data recovery unit (115) within the optical receiver (110).

10. Method according to anyone of the preceding claims, wherein the threshold value is adapted based on at least one of the following information: optical receiver type, received bit rate, forward error correction type.

11. Method according to anyone of the preceding claims, wherein a failure signal is generated if the received signal power of an optical channel is below a power threshold value and the data entity error rate is above an error rate threshold value.

12. Method according to anyone of the preceding claims, wherein a degradation signal is generated if the ratio between the sum of falsely detected ones and falsely detected zeros and the received bit rate is above a certain threshold value.

13. Method according to anyone of the preceding claims, wherein a degradation signal is provided by the protection switching logic (140) if at least one of the following conditions are fulfilled: the decision threshold value is out of a given decision threshold value range, automatic gain control information indicates that automatic gain control value is at maximum or minimum value, the received optical power is below a minimum power value or above a maximum power value.

14. Method according to anyone of the preceding claims, wherein said protection switching information is transmitted to a protection trigger entity (150) in order to cause the provision of a switching trigger by said protection trigger entity (150).

15. Control unit comprising a first interface for receiving information regarding the quality of a received optical signal of an optical transmission system and a second interface for providing protection switching information to a protection trigger entity (150), the control unit further comprising:

a protection switching logic (140) adapted to gather statistical characteristics, said protection switching logic (140) being coupled via the first interface with an optical receiver (110) for receiving said statistical characteristics being derived at least partially from an analog receiving portion of said optical receiver (110), wherein said statistical characteristics comprise information regarding the quality of said received optical signal of said optical transmission system;

the protection switching logic (140) being adapted to compare the gathered statistical characteristics with a threshold value and being adapted to provide the protection switching information at the second interface if the gathered statistical characteristics exceed said threshold value.

Alcatel-Lucent Deutschland AG

Fig. 1

EP 3 013 068 A1

Fig. 2

Gather statistical characteristics derived at least partially from the optical receiver ⟋ S200

↓

Providing gathered statistical characteristics to protection switching logic ⟋ S210

↓

Comparing gathered statistical characteristics with threshold value ⟋ S220

↓

Generating TSD/TSF signal when a threshold value is passed ⟋ S230

↓

Generating protection switch trigger ⟋ S240

Fig. 3

Europäisches Patentamt
European Patent Office
Office européen des brevets

# EUROPEAN SEARCH REPORT

Application Number

EP 14 18 9944

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/280681 A1 (FRANKEL MICHAEL Y [US] ET AL) 6 December 2007 (2007-12-06)<br>* page 1, paragraphs 4,8 *<br>* page 2, paragraph 11 *<br>* page 4, paragraph 24 - page 5, paragraph 31 *<br>* figures 2,5,6 * | 1,6-9, 12-15 | INV.<br>H04Q11/00 |
| X | US 7 146 098 B1 (WARBRICK KEVIN [GB]) 5 December 2006 (2006-12-05)<br><br>* column 1, line 5 - line 8 *<br>* column 1, line 51 - column 2, line 53 *<br>* column 6, line 4 - line 26 *<br>* column 7, line 27 - column 10, line 60 *<br>* claim 1 *<br>* figures 3,4B * | 1,2,4,5, 9-11, 13-15 | |
| X | US 2008/232244 A1 (GERSTEL ORNAN [US] ET AL) 25 September 2008 (2008-09-25)<br>* abstract *<br>* page 1, paragraphs 1, 3, 15 *<br>* page 2, paragraph 22 - page 5, paragraph 53 *<br>* figures 1-11 * | 1,2,6-8, 10,12-15 | TECHNICAL FIELDS SEARCHED (IPC)<br><br>H04Q<br>H04J |
| X<br>A | US 6 718 138 B1 (SUGAWARA MITSURU [JP]) 6 April 2004 (2004-04-06)<br>* column 1, line 15 - column 5, line 3 *<br>* column 6, line 13 - column 15, line 21 *<br>* claim 1 *<br>* figures 10-13 * | 1,15<br>2-14 | |

The present search report has been drawn up for all claims

| Place of search | Date of completion of the search | Examiner |
|---|---|---|
| Munich | 1 April 2015 | Carballo da Costa, E |

## ANNEX TO THE EUROPEAN SEARCH REPORT
## ON EUROPEAN PATENT APPLICATION NO.

EP 14 18 9944

This annex lists the patent family members relating to the patent documents cited in the above-mentioned European search report.
The members are as contained in the European Patent Office EDP file on
The European Patent Office is in no way liable for these particulars which are merely given for the purpose of information.

01-04-2015

| Patent document cited in search report | | Publication date | Patent family member(s) | | Publication date |
|---|---|---|---|---|---|
| US 2007280681 | A1 | 06-12-2007 | NONE | | |
| US 7146098 | B1 | 05-12-2006 | NONE | | |
| US 2008232244 | A1 | 25-09-2008 | NONE | | |
| US 6718138 | B1 | 06-04-2004 | FR | 2794913 A1 | 15-12-2000 |
| | | | GB | 2352597 A | 31-01-2001 |
| | | | JP | 4180738 B2 | 12-11-2008 |
| | | | JP | 2000358015 A | 26-12-2000 |
| | | | US | 6718138 B1 | 06-04-2004 |

EPO FORM P0459

For more details about this annex : see Official Journal of the European Patent Office, No. 12/82